# EUROPEAN PATENT SPECIFICATION

(11) **EP 1 842 766 B1**
(45) Date of publication and mention of the grant of the patent: **16.06.2010**
(21) Application number: 07007230.1
(22) Date of filing: 05.04.2007
(51) Int. Cl.: B62J 99/00

(54) **Meter device**
Zählereinrichtung
Dispositif de compteur

(30) Priority: 06.04.2006 JP 2006105418
(43) Date of publication of application: 10.10.2007
(73) Proprietor: Yamaha Hatsudoki Kabushiki Kaisha, Iwata-shi, Shizuoka 438-8501 (JP)
(72) Inventor: Satake, Hidenori c/o Yamaha Hatsudoki Kabushiki Kaisha, Iwata-shi Shizuoka-ken 438-8501 (JP); Wakamatsu, Katsumitsu c/o Yamaha Hatsudoki Kabushiki Kaisha, Iwata-shi Shizuoka-ken 438-8501 (JP)
(74) Representative: Grünecker, Kinkeldey, Stockmair & Schwanhäusser Anwaltssozietät

(56) References cited:
- EP-A2- 1 496 241
- JP-A- 6 032 270

## Description

The present invention relates to a meter device according to the preamble of independent claim 1. Such a meter device can be taken from the prior art document JP 06 032270 A.

In some cases in a motorcycle, a meter device, in which left and right, independent speed meters and tachometers are aligned and arranged in a vehicle width direction, is mounted above a headlight (see, for example, Patent Document 1).

Also, a wind pressure caused by a travel wind imposes, in some cases, a load on a rider according to a model of a motorcycle and it is requested to lessen such wind pressure caused by a travel wind.
Patent Document 1: Patent No. 3313765

However, lessening of wind pressure caused by a travel wind is not taken into consideration in a motorcycle provided with the conventional meter device.

Prior art document EP 1 496 241 A2 teaches a motorcycle having a wind shield which covers a meter device of the motorcycle.

The invention has been thought of in view of the conventional situation and has its object to provide a meter device, which can lessen a wind pressure caused by a travel wind.

According to the present invention said object is solved by a meter device having the features of independent claim 1. Preferred embodiments are laid down in the dependent claims.

Accordingly, it is provided a meter device for a straddle-type vehicle having at least two independent indicators being aligned in a vehicle width direction and being accommodated in a housing, said housing comprising a front wall, said front wall being provided with a rearwardly and upwardly inclined first portion positioned forward and inbetween the indicators, and with a rearwardly and upwardly inclined second portion positioned respectively in front of the indicators, wherein, when viewed from laterally of the vehicle, the first and second portions are positioned in the same position or the first portion projects more forward than the second portion.

Preferably, the meter device being arranged in the vicinity of a steering handle to comprise a plurality of independent indicators aligned and arranged in a vehicle width direction and the housing, which supports the indicators, wherein as viewed from laterally of a vehicle, the first portion of the housing is positioned forward and between the indicators and is inclined rearwardly upward, and is positioned in the same position as that of the second portion, which is positioned forwardly of the respective indicator portions and is inclined rearwardly upward, or projects forward therefrom.

Further, preferably the first portion is positioned at the foremost end centrally in the vehicle width direction such that, when viewed from laterally of the vehicle, the second portion is positioned rearward relative to the first portion.

Still further, preferably the second portion and the first portion of the housing are formed integral with each other.

Yet further still, preferably as viewed from laterally of a vehicle, the second portion and the first portion of the housing are formed to have a substantially same shape.

Preferably, at least that portion of the housing surrounding peripheries of the indicator portions, which is adjacent to the first portion of the housing, projects above the first portion in the direction of inclination.

Further, preferably as viewed from laterally of a vehicle, a lower edge of the second portion of the housing overlaps an on-board part arranged below the meter device.

Still further, preferably the on-board part is a headlight.

Yet further still, preferably the headlight is circular in external shape as viewed from the front of a vehicle.

Preferably, the lower edge of the housing is formed to follow a shape along an outer surface of the headlight.

Further, preferably a folded surface extending toward the rear of a vehicle is formed on a lower edge of the housing.

Still further, preferably a lens covering the respective indicator portions comprises a single lens common to the respective indicator portions.

Yet further still, preferably the lens includes a first lens portion, which covers an area between the indicator portions, and the first lens portion in the lens is formed to be positioned below an area, which covers the indicator portions.

Preferably, a further indicator portion is formed between the indicator portions, the further indicator portion being covered by the first lens portion.

In the following, the present invention is explained in greater detail with respect to several embodiments thereof in conjunction with the accompanying drawings, wherein:
- Fig. 1: is a side view showing a motorcycle provided with a meter device according to an embodiment of the invention,
- Fig. 2: is a side view showing the meter device,
- Fig. 3: is a plan view showing the meter device,
- Fig. 4: is a front view showing the meter device,
- Fig. 5: is a front view showing the meter device as viewed from a rider,
- Fig. 6: is a cross sectional view (cross sectional view taken along the line VI-VI in Fig. 5) showing the meter device,
- Fig. 7: is a cross sectional view (cross sectional view taken along the line VII-VII in Fig. 5) showing the meter device,
- Fig. 8: is a cross sectional view (cross sectional view taken along the line VIII-VIII in Fig. 5) showing the meter device, and
- Fig. 9: is a cross sectional view showing an essential part of a housing of the meter device.

### Description of Reference Numerals and Signs:

9: steering handle
15: headlight (on-board part)
16: meter device
17, 18: indicator portion
19: fuel reserve indicator portion (other indicator portion)
32: housing
32a: inbetween indicator portion front portion (first portion)
32b: indicator portion front portion (second portion)
61: lens
61 a, 61b: indicator lens portion (lens covering indicator portion)
61 c: inbetween indicator lens portion (first lens portion)

An embodiment will be described below with reference to the accompanying drawings.

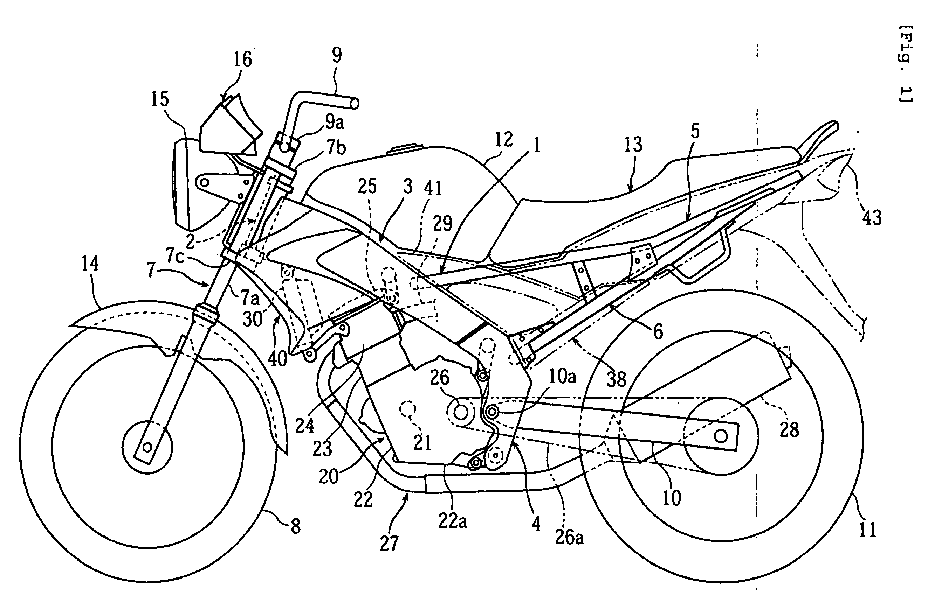

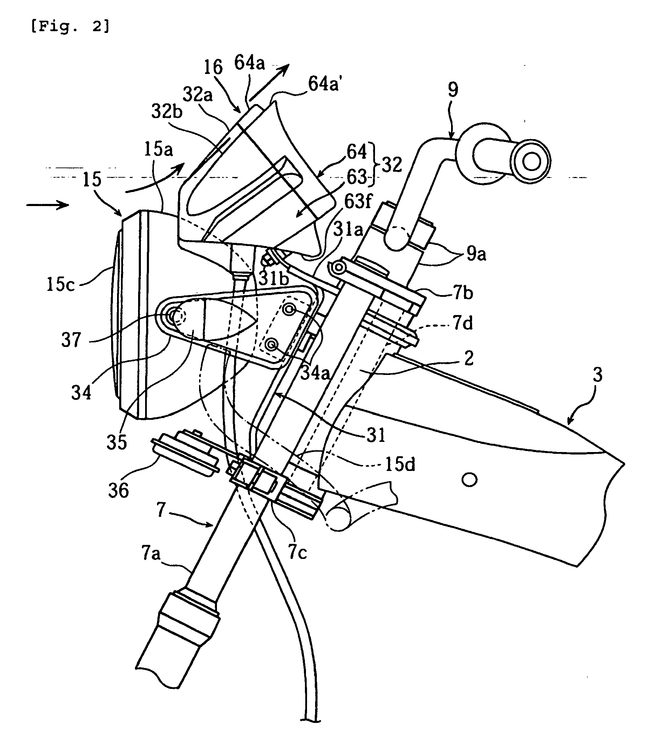

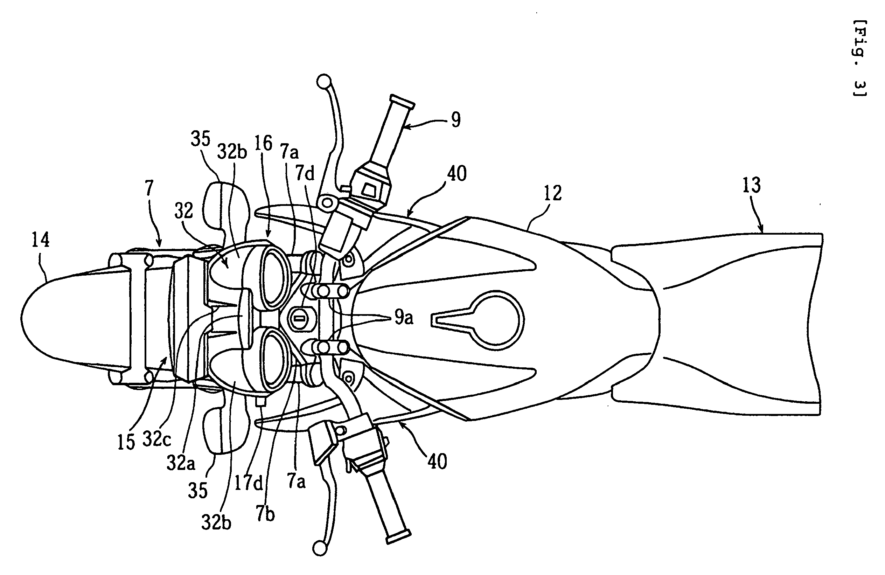

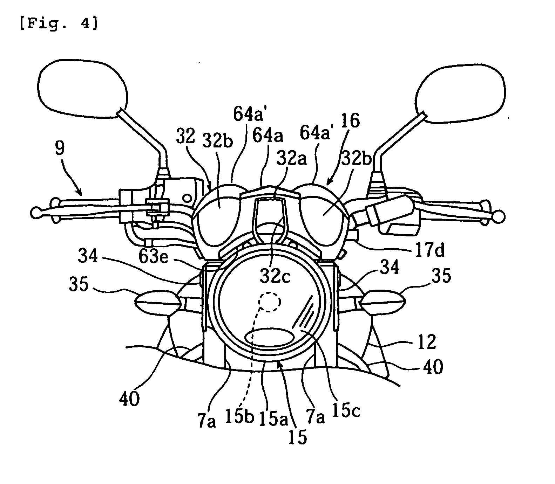

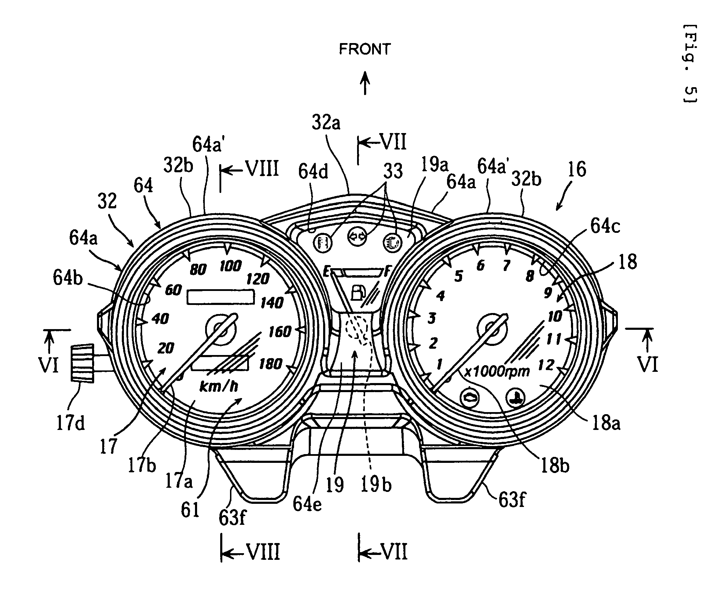

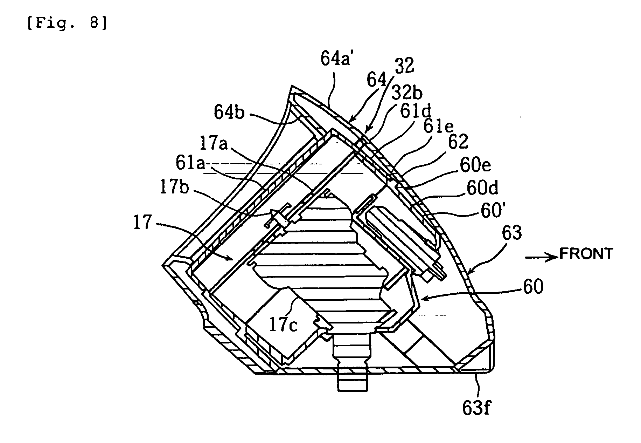

Figs. 1 to 9 are views illustrating a meter device of a motorcycle according to an embodiment. In addition, front and rear, and left and right referred to in the embodiment mean front and rear, and left and right as seen in a state of being seated on a seat.

In the drawings, the reference numeral 1 denotes a body frame of a motorcycle comprising a head pipe 2 positioned at a front end of the body frame 1, left and right tank rails 3, 3 extending obliquely downwardly of the head pipe 2 toward the rear of a vehicle, left and right rear arm brackets 4, 4 extending downwardly of and contiguous to rear ends of the left and right tank rails 3, 3, left and right seat rails 5, 5 extending obliquely upwardly of the left and right tank rails 3, 3 toward the rear of a vehicle, and left and right seat stays 6, 6 joined to bridge rear portions of the left and right seat rails 5, 5 and the left and right rear arm brackets 4, 4.

A front fork 7 is supported by the head pipe 2 to afford left and right steering. A front wheel 8 is journaled at a lower end of the front fork 7 and a steering handle 9 is mounted to an upper end thereof. Also, a front fender 14 is arranged on the front fork 7 to cover an upper portion of the front wheel 8.

The front fork 7 includes a pair of left and right fork bodies 7a, 7a, an upper bracket 7b and an underbracket 7c, which connect the left and right fork bodies 7a, 7a together. A steering shaft 7d, which connect the upper bracket 7b and the underbracket 7c together, is journaled through a bearing by the head pipe 2. The steering handle 9 is fixed to the upper bracket 7b through a handle crown 9a. Also, a main switch 7d is arranged in front of the steering handle 9 on the upper bracket 7b.

Front ends of rear arms 10 are supported on the left and right rear arm brackets 4, 4 to be able to swing vertically through a pivot shaft 10a. A rear wheel 11 is journaled by rear ends of the rear arms 10 and rear suspensions (not shown) are arranged between the rear arms 10 and rear arm brackets 4.

A fuel tank 12 is mounted on the left and right tank rails 3, 3 and a double ride seat 13 is mounted on the left and right seat rails 5, 5 rearwardly of the fuel tank 12.

A water-cooled type four-stroke engine 20 is mounted below the left and right tank rails 3, 3. The engine 20 is constructed such that a cylinder block 23, a cylinder head 24, and a head cover 25 are laminated on and bolted to a crank case 22, in which a crank shaft 21 arranged horizontally in a vehicle width direction is accommodated.

A transmission case 22a, in which a transmission (not shown) is accommodated, is formed integrally on the rear of the crank case 22. An output shaft 26 is arranged on the transmission case 22a to take out engine rotation through the transmission, and the rear wheel 11 is rotationally driven through a chain 26a by the output shaft 26.

An exhaust pipe 27 is connected to a front wall of the cylinder head 24, the exhaust pipe 27 passing below the engine 20 to be connected to a muffler 28 arranged on the right side of the rear wheel 11. An intake pipe 29 is connected to a rear wall of the cylinder head 24, the intake pipe 29 extending rearward between the left and right tank rails 3, 3 to be connected to an air cleaner (not shown). Also, a radiator 30 is arranged forwardly upwardly of the engine 20 to maintain an engine cooling water at a predetermined temperature.

Front ends of the left and right tank rails 3, 3 and an outside of the radiator 30 are covered by front covers 40, 40 made of a resin. The front covers 40, 40 function as an air scoop, through which a travel wind is introduced into the radiator 30.

Outsides of the left and right seat rails 5, 5 and the left and right seat stays 6, 6 are covered by left and right side covers 38, 38, which are made of a resin. A tail light 43 is mounted to rear ends of the left and right side covers 38, 38.

A headlight 15 is mounted to the front fork 7 to be positioned forwardly of the head pipe 2. The headlight 15 is made circular as viewed from the front of a vehicle and sized to extend over the entire width of the left and right fork bodies 7a, 7a.

The headlight 15 is constructed such that a bulb 15b is mounted detachably to a rear end in a substantially bowl-shaped light case 15a, which is opened toward the front, and an opening of the light case 15a is covered by a lens 15c. In addition, the reference numeral 15d denotes a power cable.

Upper and lower ends of a fork bracket 31 arranged to bridge the both brackets 7b, 7c are fixed to the upper bracket 7b and the underbracket 7c. A pair of left and right head light stays 34, 34 extending forward are clamped and fixed to an upper portion of the fork bracket 31. Also, a forwardly extending meter stay 31 a is formed at an upper end of the fork bracket 31.

Flasher lights 35, 35 are mounted to the left and right head light stays 34, 34 to project outward in the vehicle width direction.

The headlight 15 is mounted to front ends of the left and right head light stays 34, 34 by left and right mount screws 37, 37 so that an angle of an optical axis can be adjusted.

Also, a horn 36 is arranged below the headlight 15, the horn 36 being mounted to the fork bracket 31.

A meter device 16 is arranged above the headlight 15, the meter device 16 being mounted to the meter stay 31 a by left and right bolts 31 b.

The meter device 16 includes a meter body 60, a housing 32, in which the meter body 60 is accommodated and supported, and a lens 61, which covers an indicator portion of the meter body 60. The meter body 60 has an assembly construction, which accommodates, in a body case 60', a circular speed indicator portion (speed meter) 17, an engine speed indicator portion (tachometer) 18, a substantially sector-shaped fuel reserve indicator portion (fuel meter) 19, and neutral, turn signal, and high-beam indicators 33, 33, 33. The speed indicator portion 17 and the engine speed indicator portion 18 are aligned and arranged at a predetermined interval in the vehicle width direction and in a state of being respectively independent, and the fuel reserve indicator portion 19 is arranged between the indicator portions 17, 18. Also, the respective indicators 33 are aligned and arranged forwardly of the fuel reserve indicator portion 19 in the vehicle width direction.

The body case 60' is common to the respective indicator portions 17 to 19 and defines, in an interior thereof, speed, rotating speed, fuel reserve indicator chambers 60a, 60b, 60c, in which the respective indicator portions 17 to 19 are accommodated. Openings of the indicator chambers are directed obliquely upward and rearward to be directed toward a rider.

The speed indicator portion 17 includes a disk-shaped speed indicator panel 17a arranged on an opening 60a' of the speed indicator chamber 60a of the body case 60', a speed indicator pointer 17b, and a drive part 17c, which rotationally drives the speed indicator pointer 17b. A reset knob 17d of a trip meter, which projects outside from the housing 32, is connected to the drive part 17c.

The engine speed indicator portion 18 includes a disk-shaped engine speed indicator panel 18a arranged on an opening 60b' of the engine speed indicator chamber 60b, an engine speed indicator pointer 18b, and a drive part 18c, which rotationally drives the engine speed indicator pointer 18b.

The fuel reserve indicator portion 19 is arranged obliquely forwardly and downwardly of the speed indicator portion 17 and the engine speed indicator portion 18 as viewed in plan view, and includes a fuel reserve indicator panel 19a arranged on an opening 60c' of the fuel reserve indicator chamber 60c, a fuel reserve indicator pointer 19b, and a drive part 19c, which rotationally drives the fuel reserve indicator pointer 19b.

A common lens 61 is arranged on the body case 60' to cover the openings 60a' to 60c' of the respective indicator chambers 60a to 60c. The lens 61 includes left and right indicator lens portions 61 a, 61 b, which cover the speed indicator portion 17 and the engine speed indicator portion 18, and an inbetween indicator lens portion (first lens portion) 61c, which covers the fuel reserve indicator portion 19 between the indicator portions 17, 18.

The inbetween indicator lens portion 61 c is dented to be positioned obliquely forwardly and downwardly of the left and right indicator lens portions 61 a, 61 b.

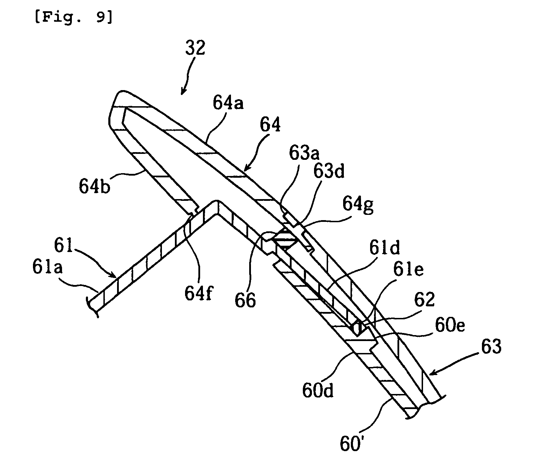

As shown in enlarged scale in Fig. 9, the lens 61 includes a cylindrical-shaped engagement wall portion 61 d extending obliquely forwardly and downwardly of an outer peripheral edge thereof to overlap an outside of an outer peripheral wall 60d of the body case 60'. An annular stopper portion 60e is protrusively formed on the outer peripheral wall 60d to face a lower end surface 61 e of the engagement wall portion 61d with a sealing member 62 therebetween. Thereby, watertight sealing is provided between the body case 60' and the lens 61.

The housing 32 includes a bottomed, cylindrical-shaped lower housing 63, which accommodates and supports the meter body 60, and a substantially lid-shaped upper housing 64 mounted to an edge of an opening 63a of the lower housing 63 to be made contiguous thereto. Left and right edges of the housing 32 are positioned outwardly of left and right edges of the headlight 15 in the vehicle width direction as viewed from the front of a vehicle.

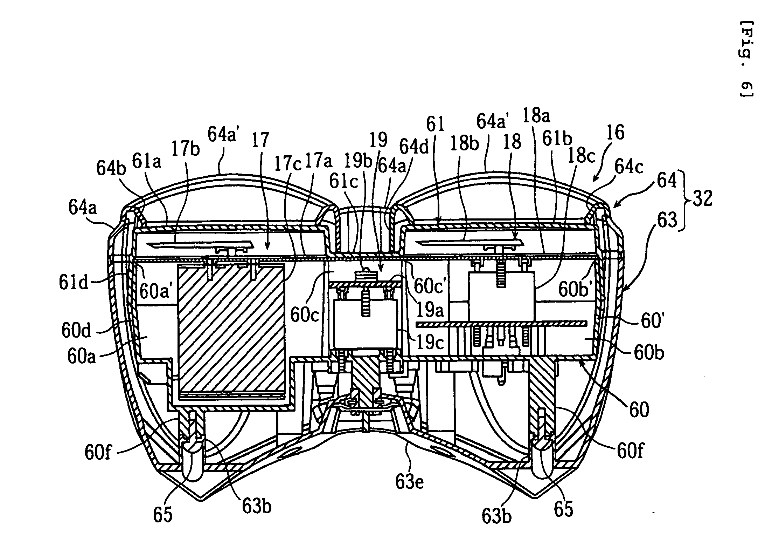

Bottomed, cylindrical-shaped mounts 63b, 63b are formed on a bottom of the lower housing 63 to extend obliquely rearwardly and upwardly. Obliquely forwardly and downwardly projecting boss portions 60f, 60f are formed on the body case 60'. The lower housing 63 is fixed to the meter body 60 by clamping the respective mounts 63b to the boss portions 60f, 60f by mount screws 65, 65 (see Fig. 6).

The upper housing 64 includes an outer peripheral wall 64a contiguous to the lower housing 63 to extend obliquely rearwardly and upwardly, circular-shaped left and right inner peripheral walls 64b, 64c bent inwardly from an upper end of the outer peripheral wall 64a to extend obliquely forwardly and upwardly to surround outer peripheral edges of the speed indicator portion 17 and the engine speed indicator portion 18, and an inner wall 64d connecting the left and right inner peripheral walls 64b, 64c together and surrounding an outer peripheral edge of the fuel reserve indicator portion 19. A rear portion 64e of the inner wall 64d covers a base of the fuel reserve indicator pointer 19b.

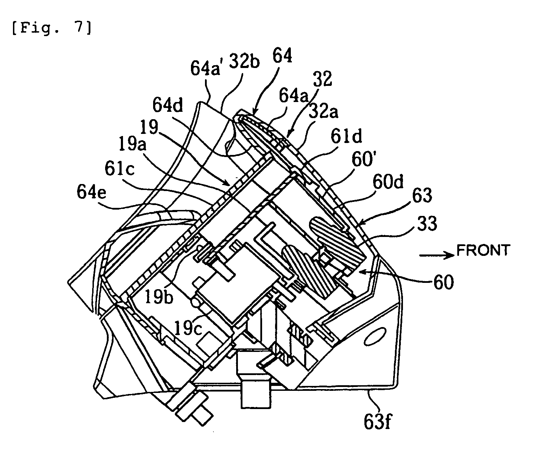

Left and right, front, outer peripheral walls 64a' of the upper housing 64 project so as to assume the form of a pent roof rearwardly of the outer peripheral wall 64a between the indicator portions (see Figs. 6 and 7). The left and right, front, outer peripheral walls 64a' increase visibility of the speed indicator portion 17 and the engine speed indicator portion 18 as viewed from a rider.

As shown in Fig. 9, pointed portions 64f are formed on inner end surfaces of the left and right inner peripheral walls 64b, 64c and the inner wall 64d of the upper housing 64 to abut against the left and right indicator lens portions 61a, 61b and the inbetween indicator lens portion 61c, respectively. Engagement projections 64g are formed at predetermined circumferential intervals on a front edge of the outer peripheral wall 64a of the upper housing 64. Engagement holes 63d, with which the engagement projections 64g engage, are formed on the opening 63a of the lower housing 63.

The upper housing 64 is fittingly fixed to the lower housing 63 by causing the pointed portions 64f to abut against the respective lens portions 61a to 61c and causing the respective engagement projections 64g to engage with the engagement holes 63d, and pushes the lens 61 against the body case 60' with the sealing member 62 therebetween. A sealing member 66 is interposed between the engagement wall portion 61 d of the lens 61 and the outer peripheral wall 64a of the upper housing 64.

An arcuate recess 63e following an upper, outer surface of the headlight 15 is formed on a front bottom of the lower housing 63. The lower housing 63 and the headlight 15 are arranged in relative positions, in which an upper edge of the headlight 15 enters the recess 63e. Thereby, the bottom of the lower housing 63 overlaps the upper edge of the headlight 15 as viewed from laterally of a vehicle.

A front wall of the housing 32 includes an inbetween indicator portion front portion (first portion) 32a positioned between the left and right speed, engine speed indicator portions 17, 18 and inclined rearwardly upward to be directed above a rider's head, and indicator portion front portions (second portion) 32b, 32b positioned forwardly of the speed indicator portion 17 and the engine speed indicator portion 18 and inclined rearwardly upward to be directed above a rider's head.

The inbetween indicator portion front portion 32a and the left and right indicator portion front portions 32b, 32b form parts of the upper housing 64 and the lower housing 63 and mutually assume a substantially same configuration. More specifically, the inbetween indicator portion front portion 32a bulges a little forwardly of the left and right indicator portion front portions 32b, 32b as viewed from laterally of a vehicle. In addition, a central, lower portion 32c of the inbetween indicator portion front portion 32a in the vehicle width direction is dented a little relative to other parts.

As viewed from a rider, the housing 32 is curved so that the inbetween indicator portion front portion 32a is positioned at a foremost end centrally in the vehicle width direction and the left and right indicator portion front portions 32b, 32b are positioned outward in the vehicle width direction and rearward relative to the inbetween indicator portion front portion 32a.

Folded surfaces 63f, 63f are formed on left and right sides of a lower edge of the lower housing 63 to be contiguous to the bottom surface of the lower housing 63 to extend rearward toward the rear of a vehicle.

According to the embodiment, since the inbetween indicator portion front portion 32a inclined rearwardly upwardly of the housing 32 is caused to project forwardly of the left and right indicator portion front portions 32b, 32b, a wind pressure acting on a rider can be lessened by the inbetween indicator portion front portion 32a inclined rearwardly upwardly and the left and right indicator portion front portions 32b, 32b.

More specifically, the housing 32 has a curved shape, in which a so-called wind protection effect is high, such that the inbetween indicator portion front portion 32a is positioned at the foremost end centrally in the vehicle width direction and the left and right indicator portion front portions 32b, 32b are positioned outward in the vehicle width direction and rearward relative to the inbetween indicator portion front portion 32a. Thereby, the housing 32 functions as a visor to produce a high wind-pressure lessening effect while being small in size. For example, in the case where the inbetween indicator portion front portion is dented rearwardly of the left and right indicator portion front portions, there is a fear that a travel wind flows concentratedly on a dented portion to be liable to strike directly against rider's head and face, by which the wind-pressure lessening effect cannot be adequately produced.

Also, since the wind-pressure lessening effect is produced only by setting a configuration of the housing 32 so that the inbetween indicator portion front portion 32a projects forwardly of the left and right indicator portion front portions 32b, 32b, it is possible to avoid a problem of an increase in cost and restrictions on design as compared with the case where a visor is mounted as a separate part.

According to the embodiment, since the inbetween indicator portion front portion 32a and the left and right indicator portion front portions 32b, 32b are formed to be made integral, it is possible to reduce the number of parts and manhour in assembly as compared with the case where the portions are formed separately.

Also, since the inbetween indicator portion front portion 32a and the left and right indicator portion front portions 32b, 32b are made substantially the same in shape as viewed from laterally of a vehicle, it is possible to further heighten the wind-pressure lessening effect.

According to the embodiment, since the left and right, front, outer peripheral walls 64a' of the upper housing 64 are caused to project obliquely rearwardly and upwardly of the outer peripheral wall 64a of the inbetween indicator portion, the left and right, front, outer peripheral walls 64a' functions as a pent roof, so that it is possible to further heighten an outward appearance as a double meter and to heighten visibility of the speed and engine speed indicator portions 17, 18 as viewed from a rider.

According to the embodiment, since the bottom of the lower housing 63 is arranged to overlap the upper end of the headlight 15 as viewed from laterally of a vehicle, an opposite side is not seen through between the headlight 15 and the housing 32 as viewed from laterally of a vehicle, so that it is possible to prevent degradation in outward appearance.

Also, since the recess 63e is formed on the bottom of the lower housing 63 so as to follow the upper surface of the headlight 15, an outward appearance as if the meter device 16 is mounted on the headlight 15 is presented as viewed from laterally of a vehicle, so that it is possible to surely prevent an opposite side from being seen through. Also, since the front portion of the housing 32 is contiguous to the upper surface of the headlight 15 to be inclined rearwardly upward, it is possible to further heighten the wind-pressure lessening effect.

In addition, while the embodiment has been described with respect to the case where the headlight 15 is arranged below the meter device 16, different on-board parts, such as horn, storage box, etc., from a headlight may be arranged below the meter device in the embodiment.

According to the embodiment, since the folded surfaces 63f are formed on the lower edge of the lower housing 63 to extend rearwardly of a vehicle, the folded surfaces 63f can heighten the wind-pressure lessening effect and prevent an interior of the meter device 16 from being exposed outside.

According to the embodiment, since the respective indicator portions 17 to 19 are covered by the one common lens 61, it is possible to reduce the number of parts and manhour in assembly as compared with the case where the portions are covered by a plurality of lenses.

Also, since the inbetween indicator lens portion 61 c of the lens 61 is formed obliquely forwardly and downwardly of the left and right indicator lens portions 61a, 61b in a stepwise manner, the fuel reserve indicator portion 19 is positioned back from the speed and engine speed indicator portions 17, 18 whereby it is possible to obtain an outward appearance further like a double meter and to heighten the lens 61 as a whole in stiffness.

In addition, while the fuel reserve indicator portion 19 is arranged between the speed and engine speed indicator portions 17, 18 according to the embodiment, other indicator portions such as an engine temperature indicator portion, etc. may be provided or not in the embodiment.

The description above discloses (amongst others), an embodiment of a meter device, in particular of a motorcycle, arranged in the vicinity of a steering handle to comprise a plurality of independent indicator portions aligned and arranged in a vehicle width direction and a housing, which supports the indicator portions, and wherein as viewed from laterally of a vehicle, a first portion of the housing positioned forward between the indicator portions and inclined rearwardly upward is positioned in the same position as that of a second portion positioned forwardly of the respective indicator portions and inclined rearwardly upward, or projects forward therefrom.

With the meter device according to this embodiment, the second portion and the first portion, which correspond to a front wall of the housing, are inclined rearwardly upward, a wind-pressure lessening effect that a travel wind is led to a neighborhood above a rider's head by the second portion and the first portion is produced, thus enabling lessening a wind pressure acting on a rider. According to the present teaching, since the first portion is in the same position as that of, or projects forwardly of the second portion as viewed from laterally of a vehicle, a portion corresponding to a front wall of the housing is curved in shape such that a central portion thereof in the vehicle width direction is positioned foremost and both sides thereof sweep back, that is, it is liable to produce a so-called wind protection effect, thus enabling producing a high wind-pressure lessening effect while being small in size. That is, in the case where the first portion is dented rearwardly of the left and right second portions in contrast to the invention, there is a fear that a travel wind flows concentratedly on such dented portion to be liable to strike directly against rider's head and face, by which the wind-pressure lessening effect cannot be adequately produced.

The description above further discloses, in order to provide a meter device, in particular of a motorcycle, which can lessen a wind pressure by a travel wind without bringing about an increase in cost and restrictions on design, wherein as viewed from laterally of a vehicle, an inbetween indicator portion front portion 32a of a housing 32 positioned forwardly of indicator portions 17, 18 and inclined rearwardly upward are positioned in the same position as those of indicator portion front portions 32b, 32b positioned forwardly of the respective indicator portions 17, 18 and inclined rearwardly upward, or projects forwardly from the indicator portion front portions.

According to a further preferred first aspect, there is further disclosed a meter device of a motorcycle arranged in the vicinity of a steering handle to comprise a plurality of independent indicator portions aligned and arranged in a vehicle width direction and a housing, which supports the indicator portions, and wherein as viewed from laterally of a vehicle, a first portion of the housing positioned forward between the indicator portions and inclined rearwardly upward is positioned in the same position as that of a second portion positioned forwardly of the respective indicator portions and inclined rearwardly upward, or projects forward therefrom.

Further, according to a further preferred second aspect, the second portion and the first portion of the housing are formed integral with each other.

Further, according to a further preferred third aspect, as viewed from laterally of a vehicle, the second portion and the first portion of the housing are formed to have a substantially same shape.

Further, according to a further preferred fourth aspect, at least that portion of the housing surrounding peripheries of the indicator portions, which is adjacent to the first portion of the housing, projects above the first portion in the direction of inclination.

Further, according to a further preferred fifth aspect, as viewed from laterally of a vehicle, a lower edge of the second portion of the housing overlaps an on-board part arranged below the meter device.

Further, according to a further preferred sixth aspect, the on-board part is a headlight.

Further, according to a further preferred seventh aspect, the headlight is circular in external shape as viewed from the front of a vehicle.

Further, according to a further preferred eighth aspect, the lower edge of the housing is formed to follow a shape along an outer surface of the headlight.

Further, according to a further preferred ninth aspect, a folded surface extending toward the rear of a vehicle is formed on a lower edge of the housing.

Further, according to a further preferred tenth aspect, a lens covering the respective indicator portions comprises a single lens common to the respective indicator portions.

Further, according to a further preferred eleventh aspect, the lens includes a first lens portion, which covers an area between the indicator portions, and the first lens portion in the lens is formed to be positioned below an area, which covers the indicator portions.

Further, according to a further preferred twelfth aspect, a further indicator portion is formed between the indicator portions, the further indicator portion being covered by the first lens portion.

## Claims

1. Meter device which is adapted to be mounted on a straddle-type vehicle, said meter device comprises at least two independent indicators (17,18) being aligned in a vehicle width direction and being accommodated in a housing (32), said housing (32) comprising a front wall, said front wall being provided with a rearwardly and upwardly inclined first portion (32a) positioned between the indicators (17,18), and with a rearwardly and upwardly inclined second portion (32b) positioned respectively in front of the indicators (17,18),
**characterized in that** the first and second portions (32a, 32b) are positioned in the same position or the first portion (32a) projects more forward than the second portion (32b) when viewed from laterally of the straddle-type vehicle.

2. Meter device according to claim 1, **characterized in that** said meter device is adapted to be mounted in the vicinity of a steering handle (9) of the straddle-type vehicle.

3. Meter device according to claim 1 or 2, **characterized in that** the first portion (32a) is positioned at the foremost end centrally in the vehicle width direction such that, when viewed from laterally of the vehicle, the second portion (32b) is positioned rearward relative to the first portion (32a).

4. Meter device according to one of the claims 1 to 3, **characterized in that** the second portion (32b) and the first portion (32a) of the housing (32) are formed integral with each other.

5. Meter device according to one of the claims 1 to 4, **characterized in that** as viewed from laterally of a vehicle, the second portion (32b) and the first portion (32a) of the housing (32) are formed to have a substantially same shape.

6. Meter device according to one of the claims 1 to 5, **characterized in that** at least that portion of the housing (32) surrounding peripheries of the indicators (17,18), which is adjacent to the first portion (32a) of the housing (32), projects above the first portion (32a) in the direction of inclination.

7. Meter device according to one of the claims 1 to 6, **characterized in that** as viewed from laterally of a vehicle, a lower edge of the second portion (32b) of the housing (32) overlaps an on-board part arranged below the meter device.

8. Meter device according to claim 7, **characterized in that** the on-board part is a headlight (15).

9. Meter device according to claim 8, **characterized in that** the headlight (15) is circular in external shape as viewed from the front of a vehicle.

10. Meter device according to claim 8 or 9, **characterized in that** the lower edge of the housing (32) is formed to follow a shape along an outer surface of the headlight (15).

11. Meter device according to one of the claims 1 to 10, **characterized in that** a folded surface (63f) extending toward the rear of a vehicle is formed on a lower edge of the housing (32).

12. Meter device according to one of the claims 1 to 11, **characterized in that** a lens covering the respective indicator portions comprises a single lens (61) common to the respective indicators (17,18).

13. Meter device according to claim 12, **characterized in that** the lens (61) includes a first lens portion (61c), which covers an area between the indicators (17,18), and the first lens portion (61 c) in the lens (61) is formed to be positioned below lens portions (61a, 61b), which covers the indicators (17,18).

14. Meter device according to claim 13, **characterized in that** a further indicator (19) is formed between the indicators (17,18), the further indicator (19) being covered by the first lens portion (61 c).

## Patentansprüche

1. Meßvorrichtung, die vorgesehen ist, an einem Fahrzeug vom Grätschsitz- Typ montiert zu werden, wobei die Meßvorrichtung zumindest zwei unabhängige Anzeigen (17, 18) hat, die in Richtung der Fahrzeugbreite ausgerichtet sind und in einem Gehäuse (32) untergebracht sind, wobei das Gehäuse (32) eine vordere Wand aufweist, die versehen ist mit einem nach hinten und nach oben geneigten ersten Abschnitt (32a), angeordnet zwischen den Anzeigen (17, 18), und einen nach hinten und nach oben geneigten zweiten Abschnitt (32b), angeordnet jeweils vor den Anzeigen (17, 18),
**dadurch gekennzeichnet, dass** der erste und zweite Abschnitt (32a, 32b) in derselben Position angeordnet sind oder der erste Abschnitt (32a) weiter nach vorn als der zweite Abschnitt (32b) vorspringt, wenn von der Seite des Fahrzeuges vom Grätschsitz- Typ gesehen.

2. Meßvorrichtung nach Anspruch 1, **dadurch gekennzeichnet, dass** die Meßvorrichtung vorgesehen ist, in der Nähe eines Lenkhandgriffs (9) des Fahrzeuges vom Grätschsitz- Typ montiert zu werden.

3. Meßvorrichtung nach Anspruch 1 oder 2, **dadurch gekennzeichnet, dass** der erste Abschnitt (32a) an dem vordersten Ende in der Mitte in Richtung der Fahrzeugbreite derart angeordnet ist, dass, wenn von der Seite des Fahrzeuges gesehen wird, der zweite Abschnitt (32b) dahinter in Bezug auf den ersten Abschnitt (32a) angeordnet ist.

4. Meßvorrichtung nach einem der Ansprüche 1 bis 3, **dadurch gekennzeichnet, dass** der zweite Abschnitt (32b) und der erste Abschnitt (32a) des Gehäuses (32) miteinander einstückig gebildet sind.

5. Meßvorrichtung nach einem der Ansprüche 1 bis 4, **dadurch gekennzeichnet, dass**, wenn von der Seite eines Fahrzeuges gesehen wird, der zweite Abschnitt (32b) und der erste Abschnitt (32a) des Gehäuses (32) so ausgebildet sind, dass sie im Wesentlichen dieselbe Form haben.

6. Meßvorrichtung nach einem der Ansprüche 1 bis 5, **dadurch gekennzeichnet, dass** zumindest der Abschnitt des Gehäuses (32), der die Ränder der Anzeigen (17, 18) umgibt, der zu dem ersten Abschnitt (32a) des Gehäuses (32) benachbart ist, über den ersten Abschnitt (32a) in der Richtung der Neigung vorspringt.

7. Meßvorrichtung nach einem der Ansprüche 1 bis 6, **dadurch gekennzeichnet, dass**, wenn von der Seite eines Fahrzeuges gesehen wird, eine untere Kante des zweiten Abschnittes (32b) des Gehäuses (32) ein fahrzeugeigenes Teil, angeordnet unter der Meßvorrichtung, überlappt.

8. Meßvorrichtung nach Anspruch 7, **dadurch gekennzeichnet, dass** das fahrzeugeigene Teil ein Scheinwerfer (15) ist.

9. Meßvorrichtung nach Anspruch 8, **dadurch gekennzeichnet, dass** der Scheinwerfer (15) in der äußeren Form kreisförmig ist, wenn von vorn des Fahrzeuges gesehen.

10. Meßvorrichtung nach Anspruch 8 oder 9, **dadurch gekennzeichnet, dass** die untere Kante des Gehäuses (32) gebildet ist, einer Form entlang einer Außenoberfläche des Scheinwerfers (15) zu folgen.

11. Meßvorrichtung nach einem der Ansprüche 1 bis 10, **dadurch gekennzeichnet, dass** eine gefaltete Oberfläche (63f), die sich in Richtung zu der Rückseite eines Fahrzeuges erstreckt, an einer unteren Kante des Gehäuses (32) gebildet ist.

12. Meßvorrichtung nach einem der Ansprüche 1 bis 11, **dadurch gekennzeichnet, dass** eine Linse, die die jeweiligen Anzeigeabschnitte abdeckt, eine einzelne Linse (61) ist, die mit den jeweiligen Anzeigen (17, 18) gemeinsam ist.

13. Meßvorrichtung nach Anspruch 12, **dadurch gekennzeichnet, dass** die Linse (61) einen ersten Linsenabschnitt (61 c) enthält, der einen Bereich zwischen den Anzeigen (17, 189 abdeckt und der erste Linsenabschnitt (61 c) in der Linse (61) gebildet ist, unter den Linsenabschnitten (61 a, 61 b), die die Anzeigen (17, 18) abdecken, angeordnet zu sein.

14. Meßvorrichtung nach Anspruch 13, **dadurch gekennzeichnet, dass** eine weitere Anzeige (19) zwischen den Anzeigen (17, 18) gebildet ist, wobei die weitere Anzeige (19) durch den ersten Linsenabschnitt (61 c) abgedeckt ist.

## Revendications

1. Dispositif de compteur qui est adapté pour être monté sur un véhicule de type à monter à califourchon, ledit dispositif de compteur comprenant au moins deux indicateurs indépendants (17, 18) alignés dans la direction de la largeur du véhicule et logés dans un logement (32), ledit logement (32) comprenant une paroi avant, ladite paroi avant étant dotée d'une première partie inclinée vers l'arrière et vers le haut (32a) positionnée entre les indicateurs (17, 18), et d'une seconde partie inclinée vers l'arrière et vers le haut (32b) positionnée respectivement devant les indicateurs (17, 18),
**caractérisé en ce que** les première et seconde parties (32a, 32b) sont positionnées dans la même position ou bien la première partie (32a) est plus saillante vers l'avant que la seconde partie (32b), vues latéralement par rapport au véhicule de type à monter à califourchon.

2. Dispositif de compteur selon la revendication 1, **caractérisé en ce que** le dispositif de compteur est adapté pour être monté au voisinage d'un guidon (9) du véhicule de type à monter à califourchon.

3. Dispositif de compteur selon la revendication 1 ou 2, **caractérisé en ce que** la première partie (32a) est positionnée à l'extrémité la plus éloignée centralement dans la direction de la largeur du véhicule de sorte que, vue latéralement par rapport au véhicule, la seconde partie (32b) est positionnée vers l'arrière par rapport à la première partie (32a).

4. Dispositif de compteur selon l'une des revendications 1 à 3, **caractérisé en ce que** la seconde partie (32b) et la première partie (32a) du logement (32) sont formées solidairement l'une avec l'autre.

5. Dispositif de compteur selon l'une des revendications 1 à 4, **caractérisé en ce que**, vues latéralement par rapport à un véhicule, la seconde partie (32b) et la première partie (32a) du logement (32) sont formées pour avoir sensiblement la même forme.

6. Dispositif de compteur selon l'une des revendications 1 à 5, **caractérisé en ce qu'**au moins la partie du logement (32) entourant les périphéries des indicateurs (17, 18), qui est adjacente à la première partie (32a) du logement (32), fait saillie au-dessus de la première partie (32a) dans la direction d'inclinaison.

7. Dispositif de compteur selon l'une des revendications 1 à 6, **caractérisé en ce que**, vu latéralement par rapport à un véhicule, un bord inférieur de la seconde partie (32b) du logement (32) chevauche une partie embarquée agencée sous le dispositif de compteur.

8. Dispositif de compteur selon la revendication 7, **caractérisé en ce que** la partie embarquée est un phare (15).

9. Dispositif de compteur selon la revendication 8, **caractérisé en ce que** le phare (15) a une forme externe circulaire, vu de l'avant d'un véhicule.

10. Dispositif de compteur selon la revendication 8 ou 9, **caractérisé en ce que** le bord inférieur du logement (32) est formé pour suivre une forme le long d'une surface externe du phare (15).

11. Dispositif de compteur selon l'une des revendications 1 à 10, **caractérisé en ce qu'**une surface repliée (63f) s'étendant vers l'arrière d'un véhicule est formée sur un bord inférieur du logement (32).

12. Dispositif de compteur selon l'une des revendications 1 à 11, **caractérisé en ce qu'**une lentille couvrant les parties d'indicateur respectives comprend une lentille unique (61) commune aux indicateurs (17, 18) respectifs.

13. Dispositif de compteur selon la revendication 12, **caractérisé en ce que** la lentille (61) comprend une première partie de lentille (61c), qui couvre une zone entre les indicateurs (17, 18) et la première partie de lentille (61c) dans la lentille (61) est formée pour être positionnée sous des parties de lentille (61a, 61b), qui couvrent les indicateurs (17, 18).

14. Dispositif de compteur selon la revendication 13, **caractérisé en ce qu'**un indicateur supplémentaire (19) est formé entre les indicateurs (17, 18), l'indicateur supplémentaire (19) étant couvert par la première partie de lentille (61c).
